# EUROPÄISCHE PATENTSCHRIFT

(11) **EP 3 898 381 B1**
(45) Veröffentlichungstag und Bekanntmachung des Hinweises auf die Patenterteilung: **07.02.2024**
(21) Anmeldenummer: 19832897.3
(22) Anmeldetag: 18.12.2019
(51) Int. Cl.: B62D 5/04, F16D 1/00, F16H 25/20

(54) **HILFSKRAFTANTRIEB FÜR EINE LENKSÄULE UND LENKSÄULE FÜR EIN KRAFTFAHRZEUG**
POWER ASSISTANCE DRIVE FOR A STEERING COLUMN, AND STEERING COLUMN FOR A MOTOR VEHICLE
ENTRAÎNEMENT DE PUISSANCE AUXILIAIRE POUR COLONNE DE DIRECTION ET COLONNE DE DIRECTION POUR VÉHICULE AUTOMOBILE

(30) Priorität: 21.12.2018 DE 102018222832
(43) Veröffentlichungstag der Anmeldung: 27.10.2021
(73) Patentinhaber: thyssenkrupp Presta AG, 9492 Eschen (LI); thyssenkrupp AG, 45143 Essen (DE)
(72) Erfinder: KEIBACH, Martin, 9472 Grabs (CH); POLZER, Andreas, 88131 Lindau (DE)
(74) Vertreter: thyssenkrupp Intellectual Property GmbH
(86) Internationale Anmeldenummer: PCT/EP2019/085931
(87) Internationale Veröffentlichungsnummer: WO 2020/127470

(56) Entgegenhaltungen:
- DE-A1-102019 112 178
- DE-A1-102019 115 542
- FR-A1- 2 835 230
- US-A1- 2004 104 067
- US-A1- 2005 133 297
- US-A1- 2019 344 822

## Beschreibung

### Stand der Technik

Die Erfindung betrifft einen Hilfskraftantrieb für eine Lenksäule eines Kraftfahrzeugs, umfassend ein in einem Gehäuse angeordneten Riementrieb, mit einem um eine Antriebsachse drehend antreibbar mit der Motorwelle eines Motors gekuppelten Antriebsrad, das über einen Treibriemen mit einem um eine Abtriebsachse drehbar in dem Gehäuse gelagerten Abtriebsrad antriebsmäßig verbunden ist

Im Stand der Technik sind Kraftfahrzeuglenkungen mit Hilfskraftunterstützung bekannt, bei denen zusätzlich zum Lenkmoment, welches vom Fahrer manuell auf das Lenkrad ausgeübt wird, durch eine elektro-mechanische Hilfskraftunterstützung zur Unterstützung und Entlastung des Fahrers eine Hilfskraft in den Lenkstrang eingebracht wird, und gegebenenfalls auch ein Zusatzlenkwinkel.

Die Hilfskraft wird mittels eines Hilfskraftantriebs erzeugt. Der Hilfskraftantrieb weist einen elektrischen Motor auf, dessen Motorwelle über ein Hilfskraftgetriebe mit dem Lenkstrang gekoppelt ist. In der gattungsgemäßen Bauform des Hilfskraftantriebs, die im Stand der Technik beispielsweise in der DE 10 2011 012 311 A1 beschrieben ist, weist das Hilfskraftgetriebe einen Riementrieb, bevorzugt einen Zahnriementrieb auf. Dieser umfasst als Antriebsrad eine mit der Motorwelle gekuppelte Zahnriemenscheibe, ein ebenfalls als Zahnriemenscheibe ausgebildetes Abtriebsrad, und einen umlaufenden, als Zahnriemen ausgebildeten Treibriemen. Das Antriebsrad ist von dem Motor um die Antriebsachse drehend antreibbar, welche im Wesentlichen parallel zur Abtriebsachse des Abtriebsrads liegt. Eine definierte Riemenspannung kann durch den Achsabstand zwischen An- und Abtriebsachse eingestellt werden.

Eine gattungsgemäße elektrische Servolenkung mit Zahnstangenunterstützung, die mit einem Kugelgewindemechanismus mit einer Zahnstangenwelle und einer Kugelmutter versehen ist, wobei der Kugelgewindemechanismus die Zahnstangenwelle so abstützt, dass die Zahnstangenwelle durch Drehung der Kugelmutter in axialer Richtung bewegt werden kann, ist aus der US 2005/0133297 A1 bekannt. Die Drehung der Kugelmutter wird dabei über einen Riemenantrieb realisiert.

Zudem ist aus der US 2004/0104067 A1 eine Antriebseinheit eines Kraftfahrzeug-Achslenkmoduls mit einem elektrischen Drehantrieb bekannt, mit dem eine Verschiebung einer Lenkstange antriebsmäßig unterstützt werden kann. Die Antriebseinheit umfasst dabei ebenfalls einen Riemenantrieb, wobei der Antriebsmotor über eine Kupplung mit dem Antriebsrad verbunden ist.

Ein Hilfsantrieb für eine Kraftfahrzeuglenkung mit einem Riemenantrieb ist ferner aus der FR 2 835 230 A1 bekannt.

In der DE 10 2011 012 311 A1 ist der Riementrieb des Hilfskraftantriebs in ein Lenkgetriebe integriert, welches ein Gehäuse aufweist, in dem eine mit den Spurstangen der lenkbaren Räder verbundene Zahnstange längsverschieblich gelagert ist. Ein in dem Gehäuse drehbar gelagertes, mit der Lenkwelle verbundenes Lenkritzel kämmt mit der Zahnstange, so dass ein in die Lenkwelle eingebrachtes Lenkmoment in eine Linearbewegung der Zahnstange umgesetzt wird, welche einen Lenkeinschlag der Räder bewirkt.

Die Hilfskraft wird über einen Spindeltrieb in die Zahnstange eingekoppelt, welche eine Gewindespindel aufweist, die in eine Spindelmutter eingreift. Die Spindelmutter ist mit dem Abtriebsrad des Riementriebs verbunden, und von diesem um die Abtriebsachse, die identisch ist mit der Spindelachse der Gewindespindel, relativ zu dieser drehend antreibbar. Dadurch, dass das Abtriebsrad in dem Gehäuse in Richtung der Abtriebsachse abgestützt ist, kann durch den Motor durch Drehung des Abtriebsrads eine Hilfskraft in Richtung der Spindelachse, was der Längsrichtung der Zahnstange entspricht, in die Zahnstange eingekoppelt werden.

Bei dem aus der DE 10 2011 012 311 A1 bekannten Hilfskraftantrieb ist das Antriebsrad fest mit der Motorwelle verbunden. Falls ein Defekt auftritt, der einen Austausch des Motors erforderlich macht, muss der Motor samt Antriebsrad demontiert werden. Dabei muss zwangsläufig das Antriebsrad aus dem Gehäuse aus dem Eingriff mit dem Treibriemen entfernt werden. Die resultierende undefinierte Lage des Treibriemens im Gehäuse erschwert die Montage eines neuen Motors, wobei das Antriebsrad mit dem Riemen in Eingriff gebracht werden muss. Außerdem kann durch Fertigungs- und Montagetoleranzen der Achsabstand verändert werden, wodurch die Riemenspannung verändert wird. Um einen ruhigen und verschleißarmen Lauf zu gewährleisten, ist anschließend eine Neujustierung der Riemenspannung erforderlich. Dadurch ist die Reparatur durch Austausch des Motors arbeits- und zeitaufwendig.

Angesichts der vorangehend erläuterten Problematik ist es eine Aufgabe der vorliegenden Erfindung, einen Hilfskraftantrieb mit Riementrieb anzugeben, der reparaturfreundlicher aufgebaut ist und einen einfacheren Austausch des Motors ermöglicht.

### Darstellung der Erfindung

Diese Aufgabe wird erfindungsgemäß gelöst durch einen Hilfskraftantrieb mit den Merkmalen des Anspruchs 1. Vorteilhafte Weiterbildungen ergeben sich aus den Unteransprüchen.

Für einen Hilfskraftantrieb für eine Lenksäule eines Kraftfahrzeugs, umfassend ein in einem Gehäuse angeordneten Riementrieb, mit einem um eine Antriebsachse drehend antreibbar mit der Motorwelle eines Motors gekuppelten Antriebsrad, das über einen Treibriemen mit einem um eine Abtriebsachse drehbar in dem Gehäuse gelagerten Abtriebsrad antriebsmäßig verbunden ist, wird erfindungsgemäß vorgeschlagen, dass der Motor an dem Gehäuse lösbar angebracht ist, und die Motorwelle über eine lösbare Kupplung mit dem Antriebsrad verbunden ist.

Der Motor ist mittels einer lösbaren Verbindung mit dem Gehäuse verbunden, beispielsweise mittels eines Schraubflansches oder dergleichen. Die lösbare Kupplung, die erfindungsgemäß zwischen dem Antriebsrad, welches bevorzugt als Zahnriemenscheibe eines Zahnriementriebs ausgeführt ist, und der Motorwelle eingesetzt ist, erlaubt eine räumliche Trennung der Antriebsverbindung. Dadurch kann der Motor nach dem Lösen der Verbindung von dem Gehäuse abgenommen und entfernt werden, wobei die Kupplung zum Antriebsrad geteilt wird.

Ein Vorteil der Erfindung ist, dass das Antriebsrad auch bei der Demontage des Motors in dem Gehäuse verbleiben kann. Der Riementrieb muss nicht wie im Stand der Technik durch Entnahme des Antriebsrads demontiert werden. Dabei ist es möglich, dass der Achsabstand zwischen An- und Abtriebsrad im Wesentlichen erhalten bleiben kann, und entsprechend die Riemenspannung weniger beeinträchtigt wird. Dadurch kann eine Neujustierung der Riemenspannung vereinfacht werden oder entfallen, und der Reparaturaufwand beim Austausch eines defekten Motors ist geringer als im Stand der Technik.

Es kann vorgesehen sein, dass die Kupplung in axialer Richtung bezüglich der Antriebsachse miteinander in Eingriff bringbare, mit der Motorwelle und dem Antriebsrad verbundene Kupplungselemente aufweist. Die Kupplungselemente sind miteinander korrespondierend ausgestaltet, und können am freien Ende der Motorwelle und auf der motornahen Seite des Antriebsrads angeordnet sein. In montiertem Zustand des Motors erzeugen die Kupplungselemente direkt miteinander oder auch über ein weiteres zwischengeschaltetes Kupplungselement eine drehmomentschlüssige Verbindung. Zur Demontage kann der Motor gelöst und in Richtung der Antriebsachse von dem Gehäuse abgenommen werden, wobei die Kupplungselemente getrennt und in axialer Richtung voneinander entfernt werden. Zur Montage wird ein funktionsfähiger Motor mit seiner Motorwelle koaxial zur Antriebsachse ausgerichtet und in entgegengesetzter axialer Richtung an das Gehäuse angesetzt, wobei die Kupplungselemente in Kupplungseingriff gebracht werden.

Die Kupplungselemente können miteinander korrespondierende Formschlusselemente aufweisen, wie Klauen, Verzahnungen oder dergleichen, die in axialer Richtung in Kupplungseingriff gebracht werden können.

Das Antriebsrad kann auf einer drehbar in dem Gehäuse gelagerten Antriebswelle angebracht sein. Die Antriebswelle ist bevorzugt fluchtend zur Motorwelle ausgerichtet, und kann auf der motornahen Seite ein Kupplungselement aufweisen, welches mit einem Kupplungselement an der Motorwelle korrespondiert.

Alternativ ist es möglich, dass das Antriebsrad drehbar auf einem Achsbolzen oder -zapfen gelagert ist, welcher in dem Gehäuse gehalten ist. Ein Kupplungselement kann dann am Antriebsrad selbst angebracht oder ausgebildet sein.

Es kann vorgesehen sein, dass das Antriebsrad quer zur Antriebsachse bewegbar in dem Gehäuse gelagert ist. Dadurch kann das Antriebsrad senkrecht zur Antriebs- und Abtriebsachse in dem Gehäuse verlagert werden, so dass der Achsabstand zwischen An- und Abtriebsachse zur Einstellung der Riemenspannung veränderbar ist. Durch das in dem Gehäuse positionierbare Antriebsrad kann eine einstellbare Riemenspannvorrichtung realisiert werden.

Eine vorteilhafte Ausführung der Erfindung sieht vor, dass das Antriebsrad an einem relativ zu dem Gehäuse positionierbaren Lagerträger gelagert ist. Der Lagerträger kann bevorzugt mindestens ein Lager zur drehbaren Lagerung des Antriebsrads oder der Antriebsachse aufweisen. Dadurch, dass die Position des Lagerträgers quer zur Antriebsachse vorgegeben wird, kann der Achsabstand zur Einstellung der Riemenspannung verändert werden. Es ist möglich, dass der Lagerträger in der eingestellten Position fixierbar ist, beispielsweise mittels Befestigungselementen wie Schrauben oder dergleichen. Eine lösbare Verbindung hat dabei den Vorteil, dass die Riemenspannung nachjustiert werden kann, indem der Lagerträger gelöst und neu positioniert wird.

Es ist ebenfalls möglich, dass der Lagerträger relativ zum Gehäuse bewegbar gelagert ist, und mit einer in Richtung des Achsabstands wirkenden Vorspannung beaufschlagt werden kann, welche in Richtung einer Vergrößerung des Achsabstands zwischen An- und Abtriebsrad wirkt. Durch die Vorspannkraft kann die Riemenspannung eingestellt werden.

Der Lagerträger kann einen Lagerdeckel umfassen, der an dem Gehäuse festlegbar ist, und relativ zu dem das Antriebsrad drehbar gelagert ist. In dem Lagerdeckel kann ein Lager angeordnet sein, in dem die Antriebswelle auf der dem Motor angewandten Seite des Antriebsrads einseitig gelagert ist. Der Lagerdeckel kann in vorteilhafter Weise von außen an dem Gehäuse befestigt sein, bevorzugt mittels lösbarer Befestigungselemente. Beispielsweise kann der Lagerdeckel einen Flansch aufweisen, der von außen an dem Gehäuse anschraubbar ist. Es ist möglich, dass der Lagerdeckel in veränderbarer Position an dem Gehäuse festlegbar ist, um den Achsabstand zur Einstellung der Riemenspannung verändern zu können.

Auf der dem Lagerdeckel abgewandten, dem Motor zugewandten Kupplungsseite ist das Antriebsrad motorseitig über die Kupplung mit der Motorwelle verbunden. Es ist dabei möglich, die motorseitige Lagerung des Antriebsrads durch die Lagerung der Motorwelle im Motor bereitzustellen, wodurch im Gehäuse keine zusätzliche motorseitige Lagerung des Antriebsrads erforderlich ist.

In einer vorteilhaften Ausführung kann der Lagerträger einen in dem Gehäuse verschieblich gelagerten Lagerschlitten aufweisen. In dem Lagerschlitten kann das Antriebsrad ein- oder beidseitig drehbar gelagert sein, beispielsweise kann eine Antriebswelle drehbar in dem Lagerschlitten gelagert sein. In dem Gehäuse ist der Lagerschlitten quer zur Antriebsachse bewegbar aufgenommen, beispielsweise entlang einer linearen Bewegungsbahn in Richtung des Achsabstands.

Es ist auch möglich, dass der Lagerschlitten einen Achsbolzen aufweist, auf dem das Antriebsrad drehbar gelagert ist.

Dadurch, dass das Antriebsrad quer zur Antriebsachse verkippbar in dem Gehäuse gelagert ist, ist der Ausgleich von zulässigen Toleranzen bei der parallelen Ausrichtung von An- und Abtriebsrad möglich. Dazu kann eine winkelausgleichende Lagerung im Lagerträger realisiert sein, oder der Lagerträger ist relativ zum Gehäuse winkelveränderbar angeordnet.

Ein vorteilhafte Ausführung der Erfindung sieht vor, dass mit dem Gehäuse eine Positioniereinrichtung verbunden ist, zur einstellbaren Positionierung und Fixierung des Motors quer zur Abtriebsachse. Über die Positioniereinrichtung ist der Motor mit dem Gehäuse verbunden. Bevorzugt kann der Motor lösbar mit der Positioniereinrichtung verbunden sein, beispielsweise über eine Formschlussaufnahme, Schraubverbindungen oder dergleichen. Dadurch ist es einfach möglich, zum Austausch den Motor zu demontieren und zu montieren.

Die Positioniereinrichtung kann lösbar mit dem Gehäuse verbunden sein, so dass sie einfach montiert und demontiert werden kann. Außerdem ist es möglich, mittels entsprechend angepasster Positioniereinrichtungen bei einer Reparatur unterschiedliche Typen von Motoren einzusetzen.

Die einstellbare Positionierung mittels der Positioniereinrichtung ermöglicht es, den Abstand zwischen der Motorwelle und der Abtriebsachse zu verändern, und dadurch den Achsabstand zwischen dem koaxial über die erfindungsgemäße Kupplung mit der Motorwelle verbundenen Antriebsrad und dem Abtriebsrad zur Justierung der Riemenspannung einzustellen. Bevorzugt kann die Positioniereinrichtung Einstellmittel wie Stellschrauben oder dergleichen aufweisen, welche eine Veränderung des Abstands zwischen Gehäuse und Motor ermöglichen. Konkret bewirkt eine Vergrößerung des Abstands zwischen Gehäuse und Motor, dass das relativ zum Gehäuse positionierbare Antriebsrad vom Abtriebsrad weg bewegt und der Achsabstands vergrößert wird, wodurch die Riemenspannung erhöht wird. Die Positioniereinrichtung bildet somit eine Vorspanneinrichtung zur Einstellung der Riemenspannung. Dadurch, dass die Positioniereinrichtung außen an dem Gehäuse angeordnet ist, und an dem Motor angreift, ist der Austausch des Motors einfach möglich, und auch eine gegebenenfalls erforderliche Nachjustierung der Riemenspannung kann problemlos von außen vorgenommen werden.

Das Antriebsrad kann koaxial mit einer Spindelmutter verbunden sein, in die eine in dem Gehäuse in Richtung der Abtriebsachse längsverschieblich gelagerte Gewindespindel eingreift. Dadurch kann die Hilfskraft über einen Spindeltrieb in den Lenkstrang eingebracht werden. Beispielsweise können die erfindungsgemäßen Vorteile bei einem Lenkgetriebe einer Zahnstangenlenkung dadurch realisiert sein, dass die Gewindespindel mit einer Zahnstange verbunden ist, wobei die Gewindespindel in einem ersten Bereich, beispielsweise an einem Ende, einer Lenkstange ausgebildet ist und die Zahnstange mit ihrer Verzahnung zum Wirkeingriff mit dem Lenkritzel in einem vorm ersten Bereich beabstandetetn zweiten Bereich, beispielsweise am anderen Ende der Lenkstange ausgebildet ist, in die ein in dem Gehäuse drehbar gelagertes Lenkritzel eingreift, das mit einer Lenkwelle verbunden ist. Das Gehäuse bildet dabei das Getriebegehäuse des Lenkgetriebes. Ein besonderer Vorteil ist, dass ein Riementrieb geschützt in dem Gehäuse untergebracht ist, wobei dank der Erfindung dennoch ein einfacher Austausch des Motors ohne eine Zerlegung des Gehäuses möglich ist. Dadurch ist die Lenkung im Vergleich mit dem Stand der Technik besonders wartungsfreundlich.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische Darstellung einer Kraftfahrzeuglenkung mit einem erfindungsgemäßen Hilfskraftantrieb,
- Figur 2: einen erfindungsgemäßer Hilfskraftantrieb in einer ersten Ausführungsform in einer schematischen auseinander gezogenen Darstellung,
- Figur 3: einen erfindungsgemäßer Hilfskraftantrieb in einer zweiten Ausführungsform in einer schematischen auseinander gezogenen Darstellung,
- Figur 4: den Hilfskraftantrieb gemäß Figur 3 in einer weiteren Ansicht,
- Figur 5: eine teilweise Schnittansicht des Hilfskraftantriebs gemäß Figur 2 entlang der Antriebs- und Abtriebsachse,
- Figur 5a: eine Detailansicht von Figur 5 in einer weiteren Ausführungsform,
- Figur 5b: eine Detailansicht wie in Figur 5a einer weiteren Ausführungsform,
- Figur 6: eine teilweise Schnittansicht des Hilfskraftantriebs gemäß Figur 3 entlang der Antriebs- und Abtriebsachse,
- Figur 7: einen erfindungsgemäßen Hilfskraftantrieb in einer dritten Ausführungsform in einer schematischen auseinander gezogenen Darstellung,
- Figur 8: den Hilfskraftantrieb gemäß Figur 7 in einer weiteren Ansicht in teilweise montiertem Zustand,
- Figur 9: den Hilfskraftantrieb gemäß Figur 8 in einer weiteren Ansicht in montiertem Zustand,
- Figur 10: den Hilfskraftantrieb gemäß Figur 9 in einer weiteren Ansicht in montiertem Zustand,
- Figur 11: einen erfindungsgemäßer Hilfskraftantrieb in einer vierten Ausführungsform in einer schematischen auseinander gezogenen Darstellung,
- Figur 12: Hilfskraftantrieb gemäß Figur 11 in montiertem Zustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

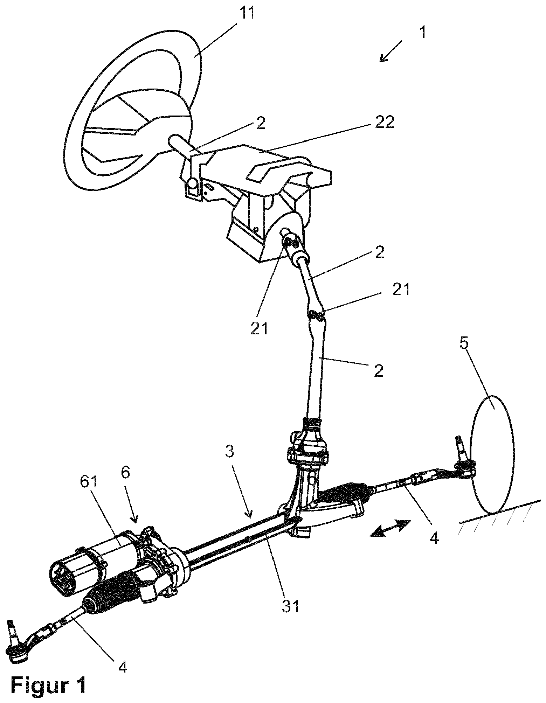

Figur 1 zeigt schematisch eine Kraftfahrzeuglenkung 1, mit einer Lenkwelle 2, an der ein Lenkrad 11 zur Einbringung eines Lenk-Drehmoments (Lenkmoments) angebracht ist. Zur Anpassung an die baulichen Gegebenheiten im Kraftfahrzeug und zum Ausgleich von Winkelversatz sind im Verlauf der Lenkwelle 2 Kreuzgelenke 21 eingesetzt.

Mittels einer Trageinheit 22, in der die Lenkwelle 2 drehbar gelagert ist, kann die Kraftfahrzeuglenkung 1 an der Karosserie eines nicht dargestellten Fahrzeugs befestigt werden.

Ein Lenkgetriebe 3 weist ein Gehäuse 31 auf, in dem die Lenkwelle 2 drehbar gelagert ist. Ein am Ende der Lenkwelle 2 innerhalb des Gehäuses 31 angebrachtes Lenkritzel (Ritzel) kämmt mit der Verzahnung einer Zahnstange, die in Richtung einer Spindelachse S, die identisch ist mit einer Abtriebsachse, längsverschieblich in dem Gehäuse 31 gelagert ist, wie in Figur 1 mit dem Doppelpfeil angedeutet ist. An den beiden aus dem Gehäuse 31 vorstehenden Enden ist die Zahnstange jeweils mit Spurstangen 4 verbunden, die in an sich bekannter Weise jeweils mit dem Achsschenkel eines gelenkten Rades 5 verbunden sind.

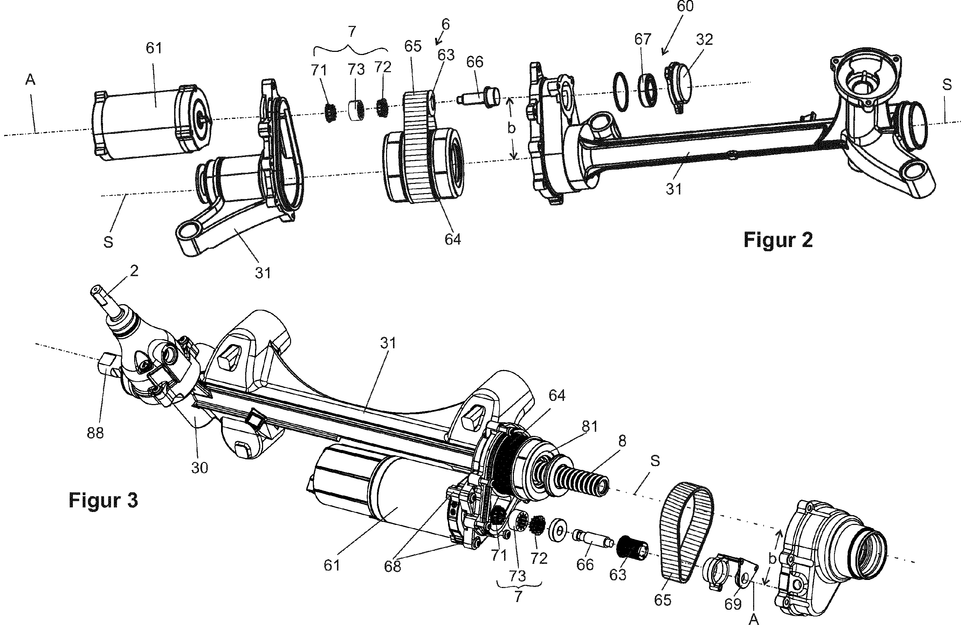

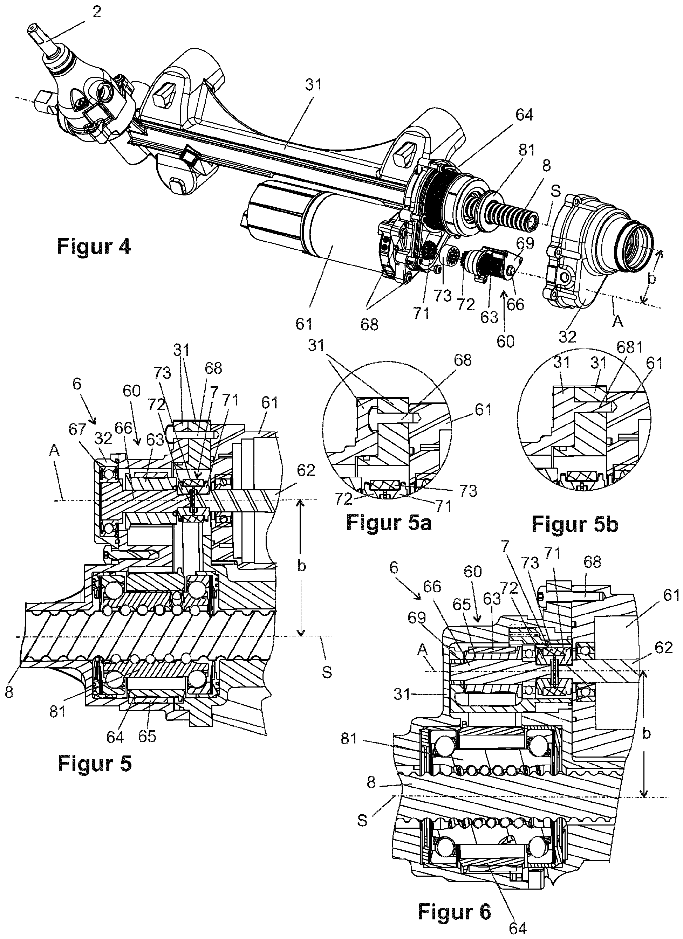

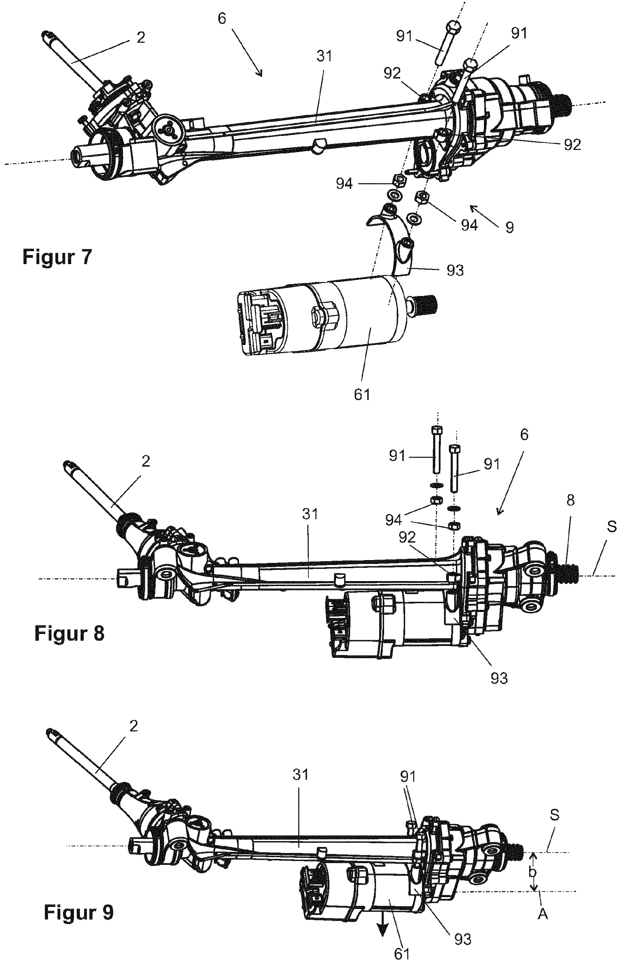

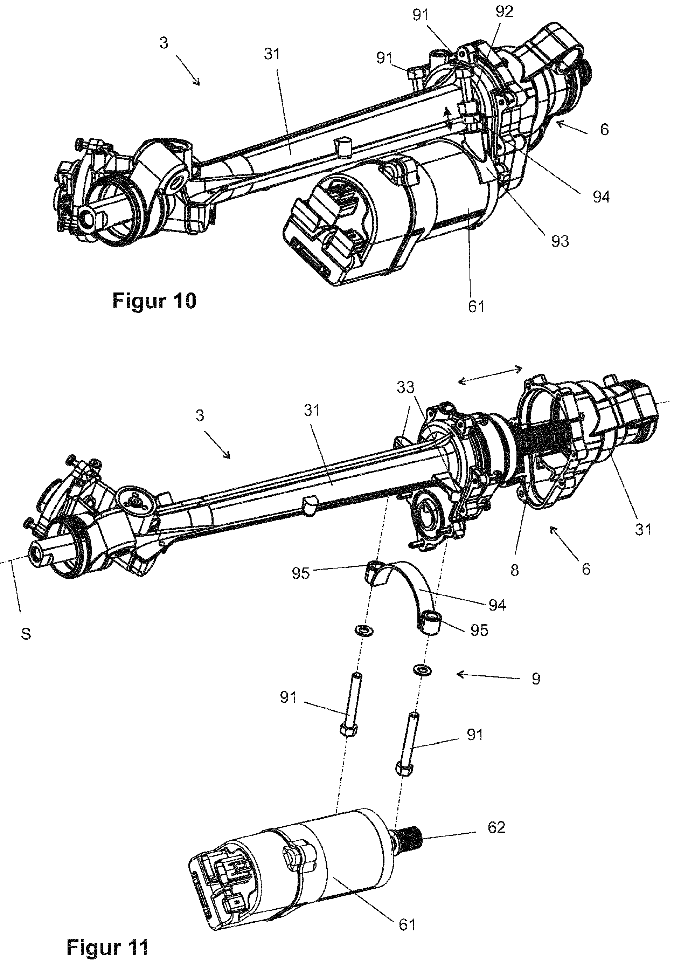

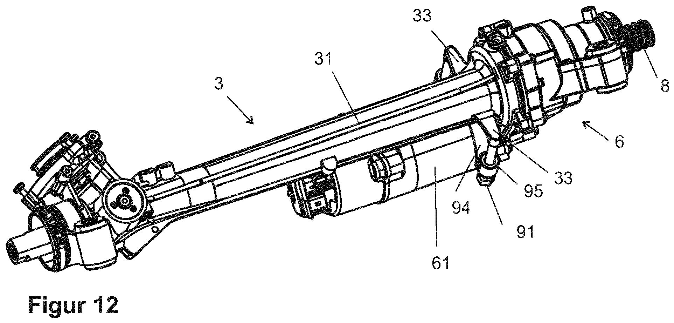

Zur Unterstützung der durch manuelle Drehung der Lenkwelle 2 bewirkten Lenkbewegung der Zahnstange ist an dem Lenkgetriebe 3 ein motorischer Hilfskraftantrieb 6 angebracht, der in Figuren 2 und 5 in einer ersten Ausführungsform in unterschiedlichen Explosionsdarstellungen gezeigt ist, und in einer zweiten Ausführungsform in Figuren 3, 4 und 6, wobei für identische Teile dieselben Bezugszeichen verwendet werden. Eine dritte Ausführung ist in den Figuren 7 bis 10 dargestellt, und eine vierte Ausführungsform in Figuren 11 und 12.

Der Hilfskraftantrieb 6 weist einen elektrischen Motor 61 auf, bevorzugt einen Servomotor, mit einer Motorwelle 62.

Das Gehäuse 31 ist wie in Figur 2 erkennbar quer zur Spindelachse S geteilt. In dem Gehäuse 31 ist als Hilfskraftgetriebe ein Riementrieb, nämlich ein Zahnriementrieb angeordnet, der ein als Zahnriemenscheibe ausgebildetes Antriebsrad 63, ein ebenfalls als Zahnriemenscheibe ausgebildetes Abtriebsrad 64 sowie einen umlaufenden, als Zahnriemen ausgebildeten Treibriemen 65 aufweist. Das Abtriebsrad 64 ist in dem Gehäuse 31 um die Abtriebs- oder Spindelachse S drehbar gelagert. Das Antriebsrad 63 ist auf einer Antriebswelle 66 angebracht, die um eine Antriebsachse A drehbar in einem bevorzugt als Wälzlager ausgebildeten Lager 67 in dem Gehäuse 31 gelagert ist. Das Lager 67 ist von außen an das Gehäuse 31 angesetzt, und wird von einem außen an dem Gehäuse 31 angeflanschten Lagerdeckel 32 gehalten.

Der Motor 61 wird mittels lösbarer Verbindungselemente 68, die beispielsweise Schrauben oder Bolzen umfassen, mit dem Gehäuse 31 verbunden, wobei die Motorwelle 62 auf der Antriebsachse A ausgerichtet ist.

Die Antriebsachse A und die Spindelachse S liegen im Wesentlichen parallel zueinander mit einem Achsabstand b.

Zwischen der Motorwelle 62 und dem Antriebsrad 63 ist eine lösbare Kupplung 7 angeordnet. Die Kupplung 7 weist ein fest mit der Motorwelle 62 verbundenes erstes Kupplungselement 71, ein am motorseitigen Ende der Antriebswelle 66 fest angebrachtes zweites Kupplungselement 72, sowie ein in montiertem Betriebszustand des Motors 61 die Kupplungselemente 71 und 72 drehmomentschlüssig kuppelndes Übertragungselement 73 auf. Die Kupplungselemente 71 und 72 können axial, in Richtung der Antriebsachse A voneinander getrennt werden. Dadurch kann der Motor 61 von dem Gehäuse 31 demontiert werden, wobei die Kupplung 7 räumlich getrennt und die Antriebsverbindung zum Antriebsrad 63 gelöst wird.

Die Antriebswelle 66 ist in dem Lager 67 an ihrem motorfernen Ende einseitig in dem Gehäuse 31 gelagert. Motorseitig erfolgt die Lagerung über die Motorwelle 62 in den Motorlagern des Motors 61.

Der Hilfskraftantrieb 6 ist in montiertem Zustand in Figur 5 vergrößert dargestellt. Darin ist gut erkennbar, wie die Antriebswelle 66 an ihrem motorseitigen Ende über die Kupplungselemente 71 und 72 und das dazwischen eingesetzte Übertragungselement 73 mit der Motorwelle 62 drehmomentschlüssig verbunden ist. Es ist ebenfalls deutlich erkennbar, dass die Antriebswelle 66 an ihrem motorfernen Ende in dem Lager 67, welches in dem Lagerdeckel 32 aufgenommen ist, drehbar relativ zum Gehäuse 31 gelagert ist.

In den Figuren 5 und 5a ist eine erste Variante dargestellt, wie die beiden Gehäuseteile des Gehäuses 31 mittels lösbarer Verbindungselemente 68 miteinander und mit dem Motor 61 verbunden sein können. Die Verbindungselemente 68 können als Schrauben oder Bolzen ausgebildet sein, und alternativ oder zusätzlich Formschlusselemente 681 umfassen, die wie in Figur 5b exemplarisch gezeigt an einer der Hälften des Gehäuses 31 stiftförmig angeformt sein können, und die andere Hälfte und/oder den Motor 61 positionieren und/oder fixieren.

Figur 5 ist entnehmbar, dass eine Gewindespindel 8 sich koaxial auf der Spindelachse S erstreckt, die als Kugelgewindespindel ausgebildet ist und in eine mit dem Abtriebsrad 64 koaxial verbundene Spindelmutter 81 eingreift, die als korrespondierende Kugelmutter ausgebildet ist. Die Gewindespindel 8 ist mit der Zahnstange 88 verbunden und bildet zusammen mit der Spindelmutter 81 einen Spindeltrieb. Die Spindelmutter 81 ist über den Riementrieb von dem Motor drehend antreibbar, und axial an dem Gehäuse 31 abgestützt. Dadurch kann durch Drehung der Spindelmutter 81 die Gewindespindel 8 in Richtung der Spindelachse S relativ zum Gehäuse 31 motorisch bewegt werden zur Unterstützung der manuell über das Lenkritzel 30 in die Zahnstange 88 eingebrachten Lenkkraft.

In den Figuren 3, 4 und 6 ist eine zweite Ausführung gezeigt, in welcher das Antriebsrad 63 in einem Lagerschlitten 69 gelagert ist. Der Lagerschlitten 69 ist in dem Gehäuse 31 quer zur Spindelachse S (Abtriebsachse) verschieblich gelagert. Durch eine Verschiebung des Lagerschlittens 69 kann der Achsabstand b verändert werden, so dass die Riemenspannung des Treibriemens 65 einstellbar ist.

In den Figuren 7 bis 10 ist ein Hilfskraftantrieb 6 gezeigt, der aufgebaut sein kann wie in den vorangehend anhand von Figur 1 bis 6 dargestellten Ausführungen. Dabei ist eine Positioniereinrichtung 9 vorgesehen, welche Einstellschrauben 91 umfasst, welche durch quer zur Spindelachse S in dem Gehäuse 31 ausgebildete Bohrungen 92 hindurchgeführt sind, wobei sie im Wesentlichen parallel zum Achsabstand b ausgerichtet sind. Die Einstellschrauben 91 stützen sich in Einschraubrichtung gegen eine Halterung 93 ab, welche mit dem Motor 61 verbunden ist. Zwischen der Halterung 93 und dem Gehäuse 31 sind Einstellmuttern 94 auf die Einstellschrauben 91 aufgeschraubt, die sich im Bereich der Bohrungen 92 an dem Gehäuse abstützen. Dadurch, dass die Einstellmuttern 94 auf die Einstellschrauben 91 aufgeschraubt werden, kann der Motor 61 von dem Gehäuse 31 weg gerichtet verstellt werden, wie in Figur 9 mit dem Pfeil angedeutet. Dabei wird das mit der Motorwelle 62 über die Kupplung 7 verbundene Antriebsrad 63 von dem Abtriebsrad 64 weg gerichtet bewegt. Dadurch kann der Achsabstand b zur Erhöhung der Riemenspannung vergrößert, oder zur Reduzierung entsprechend verkleinert werden.

In Figuren 10, 11 und 12 ist eine abgewandelte Positioniereinrichtung 9 gezeigt. Diese weist in der Halterung 94 Gewindebohrungen 95 auf, in welche die Einstellschrauben 91 vom Motor 61 aus eingeschraubt werden können, und sich in Einschraubrichtung gegen vorstehende Stützkonsolen 33 an dem Gehäuse 31 abstützen. Durch Einschrauben der Einstellschrauben 91 in die Gewindebohrungen 95 kann der Motor 61 somit von dem Gehäuse 31 weg gerichtet verstellt werden, wodurch der Achsabstand b zur Einstellung der Riemenspannung verändert werden kann.

### Bezugszeichenliste

- 1: Kraftfahrzeuglenkung
- 11: Lenkrad
- 2: Lenkwelle
- 21: Kreuzgelenk
- 22: Trageinheit
- 3: Lenkgetriebe
- 31: Gehäuse
- 32: Lagerdeckel
- 33: Stützkonsole
- 4: Spurstangen
- 5: Rad
- 6: Hilfskraftantrieb
- 61: Motor
- 62: Motorwelle
- 63: Antriebsrad
- 64: Abtriebsrad
- 65: Treibriemen
- 66: Antriebswelle
- 67: Lager
- 68: Verbindungselement
- 681: Formschlusselement
- 69: Lagerschlitten
- 7: Kupplung
- 71, 72: Kupplungselemente
- 73: Übertragungselement
- 8: Spindel
- 81: Spindelmutter
- 9: Positioniereinrichtung
- 91: Einstellschraube
- 92: Bohrung
- 93: Halterung
- 94: Einstellmutter
- 95: Gewindebohrung
- A: Antriebsachse
- S: Spindelachse (Abtriebsachse)
- b: Achsabstand

## Patentansprüche

1. Hilfskraftantrieb (6) für eine Lenksäule (1) eines Kraftfahrzeugs, umfassend ein in einem Gehäuse angeordneten Riementrieb, mit einem um eine Antriebsachse (A) drehend antreibbar mit der Motorwelle (62) eines Motors (61) gekuppelten Antriebsrad (63), das über einen Treibriemen (65) mit einem um eine Abtriebsachse (S) drehbar in dem Gehäuse (31) gelagerten Abtriebsrad (64) antriebsmäßig verbunden ist, **dadurch gekennzeichnet,**
**dass** der Motor (61) an dem Gehäuse (31) lösbar angebracht ist, und die Motorwelle (62) über eine lösbare Kupplung (7) mit dem Antriebsrad (63) verbunden ist, wobei das Antriebsrad (63) quer zur Antriebsachse (A) verkippbar in dem Gehäuse (31) gelagert ist.

2. Hilfskraftantrieb (6) nach Anspruch 1, **dadurch gekennzeichnet, dass** die Kupplung (7) in axialer Richtung bezüglich der Antriebsachse (A) miteinander in Eingriff bringbare, mit der Motorwelle (62) und dem Antriebsrad (63) verbundene Kupplungselemente (71,72) aufweist.

3. Hilfskraftantrieb (6) nach einem der vorangehenden Ansprüche, **dadurch gekennzeichnet, dass** das Antriebsrad (63) auf einer drehbar in dem Gehäuse (31) gelagerten Antriebswelle (66) angebracht ist.

4. Hilfskraftantrieb (6) nach einem der vorangehenden Ansprüche, **dadurch gekennzeichnet, dass** das Antriebsrad (63) quer zur Antriebsachse (A) bewegbar in dem Gehäuse (31) gelagert ist.

5. Hilfskraftantrieb (6) nach einem der vorangehenden Ansprüche, **dadurch gekennzeichnet, dass** das Antriebsrad (63) an einem relativ zu dem Gehäuse (31) positionierbaren Lagerträger (60) gelagert ist.

6. Hilfskraftantrieb (6) nach Anspruch 5, **dadurch gekennzeichnet, dass** der Lagerträger (60) einen in dem Gehäuse (31) verschieblich gelagerten Lagerschlitten (69) aufweist.

7. Hilfskraftantrieb (6) nach einem der vorangehenden Ansprüche, **dadurch gekennzeichnet, dass** mit dem Gehäuse (31) eine Positioniereinrichtung (9) verbunden ist, zur einstellbaren Positionierung und Fixierung des Motors (61) quer zur Abtriebsachse (S).

8. Hilfskraftantrieb (6) nach einem der vorangehenden Ansprüche, **dadurch gekennzeichnet, dass** das Abtriebsrad (64) koaxial mit einer Spindelmutter (81) verbunden ist, in die eine in dem Gehäuse (31) in Richtung der Abtriebsachse (S) längsverschieblich gelagerte Gewindespindel (8) eingreift.

9. Hilfskraftantrieb (6) nach Anspruch 8, **dadurch gekennzeichnet, dass** die Gewindespindel (8) mit einer Zahnstange (88) verbunden ist, in die ein in dem Gehäuse (31) drehbar gelagertes Lenkritzel (30) eingreift, das mit einer Lenkwelle (2) verbunden ist.

## Claims

1. A power assistance drive (6) for a steering column (1) of a motor vehicle, comprising a belt drive arranged in a housing, with an input pulley (63) which is coupled to the motor shaft (62) of a motor (61) so as to be rotationally drivable about an input axis (A) and which is drivingly connected by means of a drive belt (65) to an output pulley (64) that is mounted in the housing (31) so as to be rotatable about an output axis (S),
**characterized in that**
the motor (61) is releasably attached to the housing (31) and the motor shaft (62) is connected to the input pulley (63) by means of a releasable coupling (7), wherein the input pulley (63) is mounted in the housing (31) so as to be tiltable transversely to the input axis (A)..

2. The power assistance drive (6) as claimed in claim 1, **characterized in that** the coupling (7) has coupling elements (71, 72) which are connected to the motor shaft (62) and the input pulley (63), and can be brought into engagement with one another in the axial direction with respect to the input axis (A).

3. The power assistance drive (6) as claimed in either of the preceding claims, **characterized in that** the input pulley (63) is arranged on a drive shaft (66) which is rotatably mounted in the housing (31).

4. The power assistance drive (6) as claimed in any of the preceding claims, **characterized in that** the input pulley (63) is mounted so as to be movable in the housing (31) transversely to the input axis (A).

5. The power assistance drive (6) as claimed in any of the preceding claims, **characterized in that** the input pulley (63) is mounted on a bearing carrier (60) which can be positioned relative to the housing (31).

6. The power assistance drive (6) as claimed in claim 5, **characterized in that** the bearing carrier (60) has a bearing slide (69) which is displaceably mounted in the housing (31).

7. The power assistance drive (6) as claimed in any of the preceding claims, **characterized in that** a positioning device (9) is connected to the housing (31) for adjustable positioning and fixing of the motor (61) transversely to the output axis (S).

8. The power assistance drive (6) as claimed in any of the preceding claims, **characterized in that** the output pulley (64) is coaxially connected to a spindle nut (81) in which a threaded spindle (8) engages which is mounted in the housing (31) so as to be longitudinally displaceable in the direction of the output axis (S).

9. The power assistance drive (6) as claimed in claim 8, **characterized in that** the threaded spindle (8) is connected to a toothed rack (88) in which a steering pinion (30) engages which is rotatably mounted in the housing (31) and connected to a steering shaft (2).

## Revendications

1. Entraînement d'assistance (6) pour une colonne de direction (1) d'un véhicule automobile, comprenant un entraînement à courroie disposé dans un boîtier, avec une roue d'entraînement (63) couplée de manière à pouvoir être entraînée en rotation autour d'un axe d'entraînement (A) avec l'arbre (62) d'un moteur (61), qui est reliée en entraînement par une courroie d'entraînement (65) à une roue entraînée (64) logée dans le boîtier (31) de manière à pouvoir tourner autour d'un axe de sortie (S), **caractérisé en ce que**
le moteur (61) est monté de manière amovible sur le boîtier (31), et l'arbre du moteur (62) est relié à la roue d'entraînement (63) par un accouplement amovible (7), la roue d'entraînement (63) étant montée dans le boîtier (31) de manière à pouvoir basculer transversalement à l'axe d'entraînement (A).

2. Entraînement d'assistance (6) selon la revendication 1, **caractérisé en ce que** l'accouplement (7) présente des éléments d'accouplement (71, 72) pouvant être mis en prise les uns avec les autres dans la direction axiale par rapport à l'axe d'entraînement (A) et reliés à l'arbre moteur (62) et à la roue d'entraînement (63).

3. Entraînement d'assistance (6) selon l'une des revendications précédentes, **caractérisé en ce que** la roue d'entraînement (63) est montée sur un arbre d'entraînement (66) monté rotatif dans le boîtier (31).

4. Entraînement d'assistance (6) selon l'une des revendications précédentes, **caractérisé en ce que** la roue d'entraînement (63) est montée mobile dans le boîtier (31), transversalement à l'axe d'entraînement (A).

5. Entraînement d'assistance (6) selon l'une des revendications précédentes, **caractérisé en ce que** la roue d'entraînement (63) est montée sur un support de palier (60) positionnable par rapport au boîtier (31).

6. Entraînement d'assistance (6) selon la revendication 5, **caractérisé en ce que** le support de palier (60) présente un chariot de palier (69) logé de manière coulissante dans le boîtier (31).

7. Entraînement d'assistance (6) selon l'une des revendications précédentes, **caractérisé en ce qu'**un dispositif de positionnement (9) est relié au boîtier (31), pour le positionnement et la fixation réglables du moteur (61) transversalement à l'axe de sortie (S).

8. Entraînement d'assistance (6) selon l'une des revendications précédentes, **caractérisé en ce que** la roue menée (64) est reliée coaxialement à un écrou de broche (81) dans lequel s'engage une broche filetée (8) logée dans le boîtier (31) de manière à pouvoir se déplacer longitudinalement dans la direction de l'axe de sortie (S).

9. Entraînement d'assistance (6) selon la revendication 8, **caractérisé en ce que** la broche filetée (8) est reliée à une crémaillère (88) dans laquelle s'engrène un pignon de direction (30) monté rotatif dans le boîtier (31) et relié à un arbre de direction (2).
